# EUROPEAN PATENT APPLICATION

(11) **EP 1 553 745 A1**
(43) Date of publication of application: **13.07.2005**
(21) Application number: 04290049.8
(22) Date of filing: 08.01.2004
(51) Int. Cl.: H04L 29/06

(54) **Method for transmitting voice, image and/or video data over an IP network using dual coding and corresponding communication system**

(71) Applicant: ALCATEL, 75008 Paris (FR)
(72) Inventor: Gass, Raymond, 67150 Bolsenheim (FR)
(74) Representative: Rausch, Gabriele, Dr.

(57) **Abstract**

The present invention concerns a method for transmitting voice, image and/or video data over an IP network using dual coding.

Method for transmitting voice, image and/or video data over an Internet Protocol network by coding said data within data packets, characterized in that, at least for some transmission sequences, at least two different coding schemes or protocols are applied in parallel and in that the voice, image and/or video is (are) transmitted several times with different qualities, each transmission and associated quality of transmission corresponding to one of the applied coding schemes or protocols.

## Description

The present invention is related to the field of telecommunications, in particular the transmission of voice, image and/or video data over a network using packet transmission based transmissions.

More specifically, the present invention concerns a method for transmitting voice, image and/or video data using a dual mode coding, as well as a communication system and a telecommunication terminal able to perform the aforesaid method.

Nowadays, two major problems occuring when transmitting voice, image and/or video data over an Internet Protocol (IP) based network have not yet found a simple satisfactory solution.

The first problem concerns interoperability between various coding schemes or protocols, i.e. the problem which arises when several communication terminals using different coding schemes are connected together.

The solution proposed at the present time to solve this first problem in a simple way, avoiding time consuming and complex transcoding (when this latter is possible), is to agree on the same and lowest quality coding scheme or protocol between all the connected parties.

But this existing solution is really damaging for the quality of the communication, in particular in case of a multisession with participating terminals including codecs showing different performances.

For example, in relation to VoIP, this situation is typically illustrated when two "high-end" (e.g. wideband or ultra-wideband) codecs are currently engaged in a two parties session, and decide to add a third party, with "low-end" (e.g. G.723.1 with VAD narrow band codec). Indeed, the current implementation describes the need to fall back the three partners in the G.723.1 codec, simply because the third telephone set is not equipped with "high-end" codec.

The second problem concerns the preservation of the communications against packet loss during transmission.

The solution generally proposed at present to try to solve this second problem consists in implementing robust message or information reconstruction algorithms which can cope with some packet losses (so-called PLC, Packet Loss Concealment algorithms).

But this proposed solution is quite expensive, time consuming and limited to isolated packet losses.

It is an aim of the present invention to provide a simple solution able to solve at least the first problem exposed before, preferably both of them.

To that end the present invention first concerns a method for transmitting voice, image and/or video data over an Internet Protocol network by coding said data within data packets, characterized in that, at least for some transmission sequences, at least two different coding schemes or protocols are applied in parallel and in that the voice, image and/or video is (are) transmitted several times with different qualities, each transmission and associated quality of transmission corresponding to one of the applied coding schemes or protocols.

In accordance with a preferred embodiment of the invention, said method consists in using simultaneously two different coding schemes in parallel, a first one providing a coding and a subsequent transmission of a first quality level and a second one providing a coding and a subsequent transmission of a second higher or lower quality level, thereby assuring a double transmission of redundant copies of the voice, image and/or video data, each copy being coded with one of the two coding schemes or protocols.

In order to avoid in particular unnecessary delay and inordinately large buffers, the inventive method can advantageously provide that the voice, image and/or video data packets are carried at least twice in each transmission sequence, the packets produced by applying the at least two coding schemes being mutually interleaved within the considered transmission sequences.

Furthermore, to allow simple and effective data retrieval at the receiving end, the inventive method can also provide that each voice, image and/or video data packet or frame block is coded in accordance with each of the different coding schemes' specifications, and that said coded data packets are grouped together according to their coding scheme in transmission packets p(j) which are transmitted in their respective order of succession and in an alternative pattern mixing the transmission packets with different coding schemes, the data of the consecutive transmission packets being redundant, with a redundancy factor equal to the number of applied coding schemes.

When a dual coding is applied, the voice, image and/or video data packets is contained in adjacent frame blocks f(i), and each transmission packet p(j) contains two contiguous frame blocks f(i).

Then, said method consists, at a higher quality sending side or end, in generating a double flow with mutually inserted transmission packets p(j) according to the following pattern:
- p (n) carries frame blocks f (n-1) and f (n) coded with the lower quality coding scheme ;
- p (n + 1) carries frame blocks f (n) and f (n + 1) coded with the higher quality coding scheme ;
- p (n + 2) carries frame blocks f (n + 1) and f (n + 2) coded with the lower quality coding scheme ;
- p (n + 3) carries frame blocks f (n + 2) and f (n + 3) coded with the higher quality coding scheme ;
said pattern being repeated during each transmission sequence originating from a higher quality sending side.

Also in case of dual coding, the method preferably consists, at a higher quality sending/receiving end or side, in separating and piling the arriving transmission packets p(j) alternatively in two FIFO jitter buffers or stacks, one of them receiving the transmission packets p(j) coded with the lower quality coding scheme and the other buffer or stack receiving the transmission packets p(j) coded with the higher quality coding scheme. Then, the method consists in rebuilding the considered transmission sequence with the transmission packets p(j) coded with the higher quality coding scheme, the transmission packets or part of the transmission packets p(n) and p (n + 2) being used for said rebuilding in case of lost of the intermediate transmission packet p (n + 1).

On the other hand, the method consists, at a lower quality sending side or end, in generating a single flow of transmission packets p (j) carrying frame blocks f (i) coded with the lower quality coding scheme and, at a lower end receiving side or end, in extracting from transmission sequences with transmission packets p(j) formed by frame blocks f(i) coded with the lower quality coding scheme and with transmission packets p(j) formed by frame blocks f(i) coded with the higher quality coding scheme, only the tranmission packets p(j) of the first type in order to rebuild the considered transmission sequences.

As can be noticed from the foregoing, the basic idea of the invention, in its preferred embodiment and implementation (VoIP), is to carry voice packets twice, in interleaved packets, by using two different coding schemes, with the following combined properties:
- the two coding schemes make it possible to offer end to end compatibility based on two different coding schemes,
- double transmission of redundant copies even with different coding schemes, offer possible error retrieval when on or several pack(s) is (are) lost.

The invention will be better understood thanks to the following description and drawings of embodiments of said invention given as non limitative examples thereof.

In the accompanying drawings:
Figure 1 is a symbolic representation of the generic header format in a Real Time Protocol (IETF rfc 1889) ;
Figure 2 is a symbolic representation showing the generation of the transmission packets p(j) from the frame blocks f(i), for example of voice data packets, and,
Figure 3 is a schematical view of a communication system according to the invention.

The method of transmission according to the invention mainly consists in applying at least two different coding schemes in parallel, the voice, images and/or video being transmitted several times with different qualities, each transmission and associated quality of transmission corresponding to one of the applied coding schemes or protocols.

The voice, image and/or video data packets are carried at least twice in each transmission sequence, the packets produced by applying the at least two coding schemes being mutually interleaved within the considered transmission sequences.

Each voice, image and/or video data packet or frame block f(i) is coded in accordance with each of the different coding schemes' specifications. Said coded data packets are grouped together according to their coding scheme in transmission packets p(j) which are transmitted in their respective order of succession and in an alternative pattern mixing the transmission packets with different coding schemes, the data of the consecutive transmission packets being redundant, with a redundancy factor equal to the number of applied coding schemes.

Preferably, the invention is implemented in connection with a VoIP network, for example a LAN, the transmission packets p(j) being Real Time Protocol packets and the quality level of the transmission being determined by the bandwidth of the used codecs.

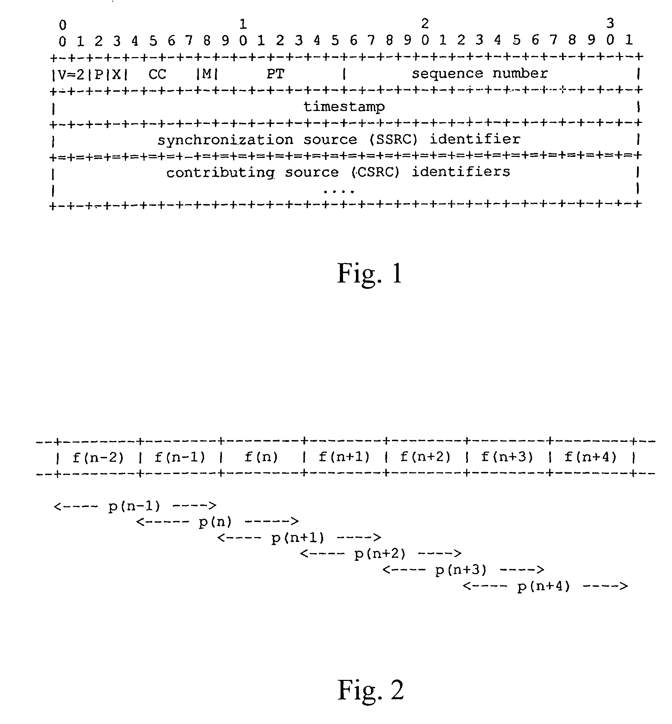

Figure 1 shows schematically a generic header format according to RTP.

Absolute time is provided in the timestamp field. It reflects the sampling instant of the first octet in the rtp data packet. This is used for synchronization purposes and jitter calculation. For fixed rate audio, the timestamp is incremented by 1 for each sampling period. In particular, a 10 ms G.711 contains 80 samples, so the timestamp will be incremented by 80 in each rtp packet. The initial value of the timestamp is random. This will be used for reordering/packet loss detection for the dual rtp flow as shown later.

According to a prefered embodiment of the inventive method, and in order to avoid undue extra time in buffers, the double flow of data packets is generated in a interleaved framing description as shown for example in figure 2, in relation with VoIP.

In this example, each frame block f(i) is retransmitted once. The rtp packets p(j) carry each two frame blocks, f(n) and f(n+1). The odd packets p(j) contain a sequence of the first codec and the even packets p(j) contain the same sequence, but translated of half an increment (e.g. 40 samples for a G.711 10 ms framing), based on the second coding scheme.

The purpose of the invention is to offer preferably simultaneously redundancy and multiple coding schemes for multi-party sessions.

In the example shown on figure 2, one can admit that :
- p(n-1), p(n+1), p(n+3) carry "high-end" codec (for instance wideband G.711 128 kbits/s)
- p(n), p(n+2), p(n+4) carry "low-end" codec (for instance G.729A 8 kbits/s)

A multi-party session (between parties A, B and C) can be based on the use of p(n-1), p(n+1), p(n+3) sequence between A and B which are equipped to handle wideband audio, and the use of the second sequence between A and C and between B and C, since C is not in a position to handle wideband.

Then, when a rtp packet is lost [e.g. : p(n+1)], B is able to rebuild the missing information since f(n) can be found in p(n) and f(n+1) can be found in p(n+2). Both p(n) and p(n+2) are coded in low resolution, but the retrieved data is still better than no data at all.

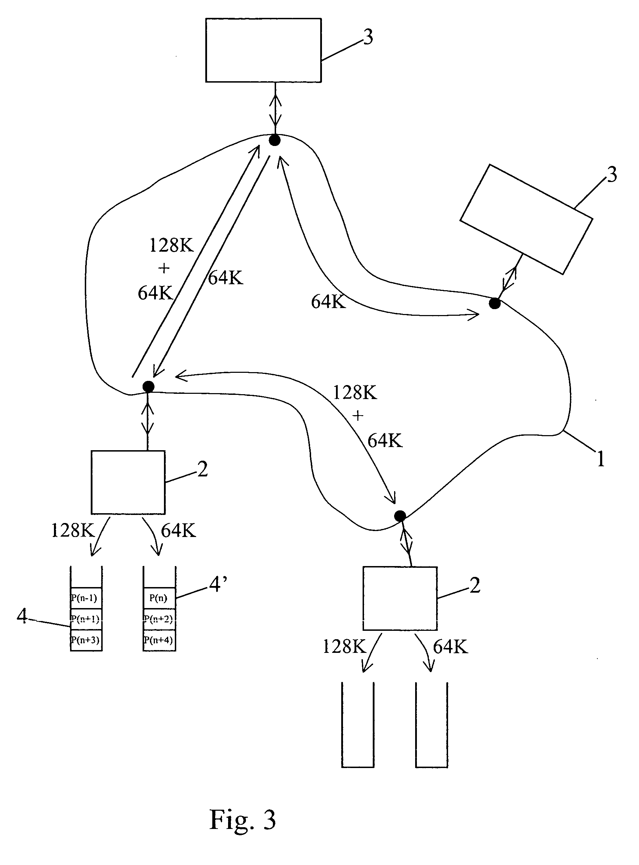

As can be seen from figure 3, the present invention also concerns a communication system including several telecommunication terminals 2, 3 connected over an Internet Protocol based network 1, said terminals 2, 3 being able to transmit voice, image and/or video data by coding them within data packets, said terminals comprising at least two terminals 2 applying a first coding scheme or protocol and at least one terminal 3 applying at least one second coding scheme or protocol.

According to the invention, the terminals 2 normally working with the first coding scheme or protocol are also able to apply the at least one second coding scheme or protocol and include means to send voice, image and/or video data several times with different qualities, each transmission and associated quality of transmission corresponding to one of the applied coding schemes or protocols.

Furthermore, the terminals 2 normally working with the first coding scheme or protocol comprise means to apply simultaneously two different coding schemes in parallel, the first one and a second one, and the at least one other terminal 3 only uses the second coding scheme, the first coding scheme providing coding, decoding and transmission features of a first quality level and the second coding scheme providing coding, decoding and transmission features of a second and lower quality level.

The terminals 2 will send the dually coded data twice (once with each coding), whereas the terminals 3 (which only send and receive data encoded with the second coding scheme) will send the single coded data only once.

Advantageously, each of the terminals 2 applying the two different coding schemes or protocols includes, on the one hand, means assuring a double transmission of redundant copies of the voice, image and/or video data , each copy being coded in one of the two coding schemes and, on the other hand, means able to separate and at least temporaly store the received transmission packets p(j) according to their respective coding scheme and means to rebuild the originaly sent transmission sequence of data packets by using first and foremost the transmission packets p(j) based on the first coding scheme and by using transmission packets p(j) based on the second coding scheme when packets p(j) based on the first coding scheme are missing, damaged or showing errors.

The transmission packets p(j) can for example, after having being separated, be stored in two different buffers 4 and 4' used as temporary storage places for the data packets during reconstruction of the transmission sequence.

The various components of the communication system shown on figure 3 also comprise additional means to carry out the method of transmission described before.

Finally, the present invention also encompasses a communication terminal 2 able to be connected to a communication system as described before and to apply, when sending and receiving voice, image and/or video data, at least two different coding schemes or protocols, characterized in that it comprises means enabling it to perform the method as described before.

Preferably, said communication terminal 2 consists of a VoIP compatible telephone and includes means (not schown) to commute between a single coding/decoding mode and a dual coding/decoding mode, depending on the terminal(s) it is connected to during a communication session.

The present invention is, of course, not limited to the preferred embodiments described and represented herein, changes can be made or equivalents used without departing from the scope of the invention.

## Claims

1. Method for transmitting voice, image and/or video data over an Internet Protocol network by coding said data within data packets, **characterized in that**, at least for some transmission sequences, at least two different coding schemes or protocols are applied in parallel and **in that** the voice, image and/or video is (are) transmitted several times with different qualities, each transmission and associated quality of transmission corresponding to one of the applied coding schemes or protocols.

2. Method according to claim 1, **characterized in that** it consists in using simultaneously two different coding schemes in parallel, a first one providing a coding and a subsequent transmission of a first quality level and a second one providing a coding and a subsequent transmission of a second higher or lower quality level, thereby assuring a double transmission of redundant copies of the voice, image and/or video data, each copy being coded with one of the two coding schemes or protocols.

3. Method according to anyone of claims 1 and 2, **characterized in that** the voice, image and/or video data packets are carried at least twice in each transmission sequence, the packets produced by applying the at least two coding schemes being mutually interleaved within the considered transmission sequences.

4. Method according to anyone of claims 1 to 3, **characterized in that** each voice, image and/or video data packet or frame block is coded in accordance with each of the different coding schemes' specifications, and **in that** said coded data packets are grouped together according to their coding scheme in transmission packets p(j) which are transmitted in their respective order of succession and in an alternative pattern mixing the transmission packets with different coding schemes, the data of the consecutive transmission packets being redundant, with a redundancy factor equal to the number of applied coding schemes.

5. Method according to claim 2, or anyone of claims 3 and 4 if depending of claim 2, **characterized in that**, the voice, image and/or video data packets being contained in adjacent frame blocks f(i), and each transmission packet p(j) containing two contiguous frame blocks f(i), said method consists, at a higher quality sending side, in generating a double flow with mutually inserted transmission packets p(j) according to the following pattern:
- p (n) carries frame blocks f (n-1) and f (n) coded with the lower quality coding scheme ;
- p (n + 1) carries frame blocks f (n) and f (n + 1) coded with the higher quality coding scheme ;
- p (n + 2) carries frame blocks f (n + 1) and f (n + 2) coded with the lower quality coding scheme ;
- p (n + 3) carries frame blocks f (n + 2) and f (n + 3) coded with the higher quality coding scheme ;
said pattern being repeated during each transmission sequence originating from a higher quality sending side.

6. Method according to claim 5, **characterized in that** it consists, at a higher quality receiving side, in separating and piling the arriving transmission packets p(j) alternatively in two FIFO jitter buffers or stacks, one of them receiving the transmission packets p(j) coded with the lower quality coding scheme and the other buffer or stack receiving the transmission packets p(j) coded with the higher quality coding scheme, and then rebuilding the considered transmission sequence with the transmission packets p(j) coded with the higher quality coding scheme, the transmission packets or part of the transmission packets p(n) and p (n + 2) being used for said rebuilding in case of lost of the intermediate transmission packet p (n + 1).

7. Method according to claim 2 or anyone of claims 3 to 6 if depending of claim 2, **characterized in that** it consists, at a lower quality sending side, in generating a single flow of transmission packets p (j) carrying frame blocks f (i) coded with the lower quality coding scheme and, at a lower end receiving side, in extracting from transmission sequences with transmission packets p(j) formed by frame blocks f(i) coded with the lower quality coding scheme and with transmission packets p(j) formed by frame blocks f(i) coded with the higher quality coding scheme, only the tranmission packets p(j) of the first type in order to rebuild the considered transmission sequences.

8. Method according to anyone of claims 1 to 7, **characterized in that** the network is a VoIP network, for example a LAN, **in that** the transmission packets p(j) are Realtime Transport Protocol packets and **in that** the quality level of the transmissions is determined by the bandwidth of the respectively used codecs at the sending/receiving ends.

9. Communication system including several telecommunication terminals connected over an Internet Protocol based network, said terminals being able to transmit voice, image and/or video data by coding them within data packets, said terminals comprising at least two terminals applying a first coding scheme or protocol and at least one terminal applying at least one second coding scheme or protocol, **characterized in that** the terminals (2) normally working with the first coding scheme or protocol are also able to apply the at least one second coding scheme or protocol and include means to send voice, image and/or video data several times with different qualities, each transmission and associated quality of transmission corresponding to one of the applied coding schemes or protocols.

10. Communication system according to claim 9, **characterized in that** the terminals (2) normally working with the first coding scheme or protocol comprise means to apply simultaneously two different coding schemes in parallel, the first one and a second one, and **in that** the at least one other terminal (3) only uses the second coding scheme, the first coding scheme providing coding, decoding and transmission features of a first quality level and the second coding scheme providing coding, decoding and transmission features of a second and lower quality level.

11. Communication system according to claim 10, **characterized in that** each of the terminals (2) applying the two different coding schemes or protocols includes, on the one hand, means assuring a double transmission of redundant copies of the voice, image and/or video data, each copy being coded in one of the two coding schemes and, on the other hand, means able to separate and at least temporaly store the received transmission packets p(j) according to their respective coding scheme and means to rebuild the originaly sent transmission sequence of data packets by using first and foremost the transmission packets p(j) based on the first coding scheme and by using transmission packets p(j) based on the second coding scheme when packets p(j) based on the first coding scheme are missing, damaged or showing errors.

12. Communication system according to anyone of claims 9 to 11, **characterized in that** it comprises means to carry out the method according to anyone of claims 1 to 8.

13. Communication terminal able to be connected to a communication system according to anyone of claims 9 to 12 and to apply, when sending and receiving voice, image and/or video data, at least two different coding schemes or protocols, **characterized in that** it comprises means enabling it to perform the method according to anyone of claims 1 to 8.

14. Communication terminal according to claim 13, **characterized in that** it consists of a VoIP compatible telephone.

15. Communication terminal according to anyone of claims 13 and 14, **characterized in that** it also includes means to commute between a single coding/decoding mode and a dual coding/decoding mode, depending on the terminal(s) it is connected to during a communication session.
